# EUROPÄISCHE PATENTSCHRIFT

(11) **EP 2 608 337 B1**
(45) Veröffentlichungstag und Bekanntmachung des Hinweises auf die Patenterteilung: **21.02.2018**
(21) Anmeldenummer: 12008491.8
(22) Anmeldetag: 20.12.2012
(51) Int. Cl.: H02G 15/115, H05B 3/00, H02G 15/18

(54) **Kabelverbindungsmuffenvorrichtung**
Cable connection sleeve device
Dispositif de manchon de raccordement de câble

(30) Priorität: 23.12.2011 DE 102011122156
(43) Veröffentlichungstag der Anmeldung: 26.06.2013
(73) Patentinhaber: Hemstedt GmbH, 74336 Brackenheim (DE)
(72) Erfinder: Pommé, Klaus, 4694 Scherpenisse (NL)
(74) Vertreter: Clemens, Gerhard

(56) Entgegenhaltungen:
- WO-A1-02/063735
- DD-A5- 287 126
- FR-A1- 2 504 309
- FR-A3- 2 445 679
- US-A- 4 668 477
- US-A- 4 746 305

## Beschreibung

### TECHNISCHES GEBIET

Die vorliegende Erfindung betrifft eine Kabelverbindungsmuffenvorrichtung zur dichtenden Verbindung eines ankommenden und eines abgehenden Kabels, insbesondere für Heizkabel und insbesondere geeignet für den Ex-Bereich, mit einem Grundkörper mit einer durchgehenden Grundkörperausnehmung, jeweils einer in den Endbereichen des Grundkörpers angeschlossener Andrückmutter und Dichtringeinheiten, die den Verbindungsbereich der Kabel vor äußeren Einflüssen schützen, wobei die Dichtringeinheiten bei an dem Grundkörper angeschlossener Andrückmutter permanent unter der pressenden Wirkung von Druckfedern stehen, innerhalb jeder Andrückmutter ein längsverschiebliches Druckstück mit einer durchnehmenden Ausnehmung für das Kabel vorhanden ist, eine an das Druckstück innenseitig anschließende, in Querrichtung ringförmige Dichtringeinheit vorhanden ist, die die Außenumfangsfläche des Kabels dichtend umgibt und im übrigen an der Innenwandung der Andrückmutter und des Grundkörpers direkt oder indirekt dichtend anliegt, und eine erste Druckfeder zwischen der Andrückmutter und dem Druckstück wirkt.

### STAND DER TECHNIK

Es sind Heizkabelverbindungsmuffenvorrichtungen der eingangs genannten Art bekannt. Derartige Verbindungsmuffen besitzen einen Muffenkörper, mit einer durchgehenden Ausnehmung, wobei im Innenraum des Muffenkörpers die zwischen den ankommenden und abgehenden Kabel hergestellte Verbindung angeordnet ist. Dabei ist diese Verbindung innerhalb eines Isolationsrohres angeordnet. In den jeweiligen Endbereichen des Muffenkörpers werden als Dichtstopfen ausgebildete elastische Mittel eingeführt, die mittels einer auf den Muffenkörper aufgeschraubten Verschlussmutter dichtend an die Wandung des Muffenkörpers gepresst werden.

Derartige Verbindungsmuffen sind im praktischen Einsatz relativ großen Temperaturschwankungen unterworfen, was bei den bekannten Verbindungsmuffen zu Problemen hinsichtlich der Dichtigkeit der Muffe führen. Die bekannten Verbindungsmuffen sind für einen dauerhaften Einsatz über 200° C (Celsius) nicht geeignet. Üblicherweise sind die Dichtmittel aus Silikon, wobei das Problem besteht, dass das Silikon hinsichtlich seiner Materialeigenschaften beispielsweise unter Luftabschluss altert oder bei hohen Temperaturen weicher wird und seine zu Dichtungszwecken erforderliche Elastizität teilweise verliert.

In der WO 02/063735 A1 ist eine Kabeldurchführung mit den Merkmalen des Oberbegriffs des Anspruchs 1 beschrieben. Dabei werden Dichtmittel eingesetzt, die den Verbindungsbereich der Kabel vor äußern Einflüssen schützen und die bei an dem Grundkörper angeschlossene Andrückmutter permanent unter der pressenden Wirkung elastischer Mittel stehen. Die elastischen Mittel sind dabei als Feder ausgebildet.

In der FR 2 445 679 A3 ist eine Kabelverbindungsmuffenvorrichtung für elektrische Heizleitungen beschrieben, bei der ein einkommendes und abgehendes Kabel angeschlossen ist. Dabei wird auf ein Mittelstück eine Schraubbüchse aufgeschraubt, die über ein Druckstück auf eine Klemmbuchse eine dichtende drückende Kraft auf das Mittelstück zum dichtenden Anschluss ausübt.

Die FR 2 504 309 A1 offenbart eine Muffenverbindung für Telefonkabel, wobei die Muffenverbindung Schraubhülsen aufweist, wobei zwischen den Kabel und der Gewindehülse verformbare Ringeinheiten vorhanden sind, die kegelförmig ausgebildet sind und zu Dichtungszwecken bei miteinander verschraubten Gewindehülsen pressend an den Außenmantel des Kabels angedrückt werden.

Die US 4 668 477 A offenbart den Kabelanschluss eines Kabels an einen Gassensor, der eine Dichtigkeit auch bei hohen Temperaturen gewährleisten muss. Zur Gewährung der Dichtigkeit werden Federelemente eingesetzt, die drückend auf Dichtmittel einwirken.

In der DD 287 126 A5 ist eine Einrichtung für den elektrotechnischen Anschluss von Kabeln und Leitungen an Gefäßen mit hohen Druck- und Temperaturdifferenzen beschrieben. Der Kabelanschluss besteht aus einem Dichtkonus und einer Konusaufnahme, wobei zwischen der als Hohlkegel ausgebildeten Konusaufnahme und dem Dichtkonus ein aufgeweiterter Kabelmantel als Dichtelement gegenüber dem Gehäuse wirkt. Zusätzlich ist zwischen dem Gehäuse und der Konusaufnahme eine Spannfeder angeordnet.

In der US 4 746 305 A ist eine Anschlusseinrichtung für ein Hochfrequenzcoaxialkabel mit Bayonet-Verschluss beschrieben. Dabei wird zwischen einer Anschlusshülse und einem Druckstück eine das Druckstück umgebende Feder eingesetzt, um eine Dichtwirkung zu erzeugen.

### DARSTELLUNG DER ERFINDUNG

Ausgehend von dem genannten Stand der Technik liegt der vorliegenden Erfindung die Aufgabe beziehungsweise das technische Problem zugrunde, eine Kabelverbindungsmuffenvorrichtung der eingangs genannten Art anzugeben, die eine dauerhaft zuverlässige Funktionalität bezüglich der Dichtigkeit in einem Temperaturbereich von zumindest minus 60° C (Celsius) bis zumindest plus 200° C (Celsius) gewährleistet, die wirtschaftlich hergestellt werden kann und eine einfache Montage ermöglicht. Insbesondere sollen die erfindungsgemäße Kabelverbindungsmuffenvorrichtung die in den Vorschriften für explosionsgeschützte Produkte vorgeschriebenen Anforderungen gemäß IEC60079-0, IEC62086-1 und IEC60079-30-1 erfüllen.

Die erfindungsgemäße Kabelverbindungsmuffenvorrichtung ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Die erfindungsgemäße Kabelverbindungsmuffenvorrichtung der eingangs genannten Art zeichnet sich demgemäß dadurch aus, dass eine Klemmeinheit mit einer durchgehenden Stufenausnehmung mit einem Endanschlag vorhanden ist, die bereichsweise in den Grundkörper eingeführt ist, innerhalb derer das Druckstück bereichsweise angeordnet und längsverschieblich vorhanden ist, wobei die Innenwandung mit Endanschlag der Klemmeinheit, die vordere Stirnseite des Druckstücks und die Außenwandung eines eingeführten Kabels eine Kammer bilden, innerhalb derer die Dichtringeinheit nach allen Seiten dichtend unter der Wirkung der ersten Druckfeder vorhanden ist, zwischen der Außenwandung der Klemmeinheit und der Innenwandung der Andrückmutter eine Dichtringeinheit dichtend angeordnet ist, die mit ihrer vorderen Stirnseite an der Stirnseite des Grundkörpers anliegt und an ihrer gegenüberliegenden Stirnseite über eine zweite Druckfeder, die sich an der Innenwandung der Andrückmutter abstützt, bei an dem Grundkörper angeschlossener Andrückmutter mit Druck beaufschlagt wird, an jeder Stirnseite der Dichtringeinheit eine Schlussringeinheit angeordnet ist und an dem nach innen weisenden Endbereich des Druckstücks ein nach außen weisender Flansch angeschlossen/angeformt ist.

Dadurch, dass die Dichtmittel permanent unter Druck stehen wird eine dauerhaft zuverlässige Dichtfunktion gewährleistet, weil dadurch die sich ändernden Dichteigenschaften in Abhängigkeit der jeweils vorhandenen Temperatur beziehungsweise die Änderung der Dichteigenschaften infolge von Alterung weitestgehend ausgeglichen werden können. Damit ist eine dauerhaft zuverlässige Dichtfunktion gewährleistet.

Die Kabelverbindungsmuffenvorrichtung kann beispielsweise für Heizkabel im Rahmen einer Verbindung von Heißleiter mit Heißleiter, Heißleiter mit Kaltleiter oder Kaltleiter mit Kaltleiter eingesetzt werden, ist jedoch nicht auf Heizkabel beschränkt.

Eine konstruktive einfache und besonders vorteilhafte Ausgestaltung zeichnet sich dadurch aus, dass die Druckfedern als zumindest eine Schraubendruckfeder ausgebildet sind.

Die Dichtringeinheit besteht bevorzugt aus Silikon.

Eine besonders vorteilhafte Ausgestaltung zeichnet sich dadurch aus, dass die Schlussringeinheit bevorzugt aus Teflon besteht. Dabei wird bevorzugt eine Schlussringeinheit verwendet, die eine kegelstumpfmantelförmige Kontur aufweist, das heißt, die zunächst bei noch nicht vorhandener Anpresskraft der elastischen Mittel quer zu den abzudichtenden Wandungen angeordnet ist und infolge des Anpressdruckes sich in die Senkrechten ausrichtet und gegen die Wandungen presst, so dass die Kabeldichteinheit in einer quasi praktisch dichten Kammer angeordnet ist und ein Eindringen von Kabeldichtungsmaterial, insbesondere bei hohen Temperaturen, in anschließende Wandungsbereiche unterbunden wird.

Durch die Kabeldichteinheit wird somit das eingeführte Heizkabel zur Innenwandung der Klemmeinheit abgedichtet. Die Kabeldichteinheit steht unter dem Pressdruck der ersten Druckfeder, was eine zuverlässige Aufrechterhaltung der Dichtfunktion bei unterschiedlichsten Temperaturen gewährleistet.

Eine konstruktiv besonders einfache Weiterbildung zeichnet sich dadurch aus, dass an dem nach innen weisenden Endbereich des Druckstücks ein nach außen weisender Flansch angeschlossen beziehungsweise angeformt ist, wobei an diesem Flansch sich die erste Druckfeder abstützt, die sich wiederum im gegenüberliegenden Endbereich an einen ersten Innenanschlag der Andrückmutter abstützt. Dabei umgibt die erste Druckfeder außenumfangsmäßig das Druckstück, was zu einem besonders kompakten Aufbau führt.

Durch die Dichtringeinheit wird die Außenwandung der Klemmeinheit zur Innenwandung der Andrückmutter hin abgedichtet. Die Dichtringeinheit steht unter dem Pressdruck der zweiten Druckfeder, was eine zuverlässige Aufrechterhaltung der Dichtfunktion bei unterschiedlichsten Temperaturen gewährleistet.

Um ungewünschte Verformungen der Dichtringeinheit unter Druck zu verhindern, ist gemäß einer vorteilhaften Ausgestaltung zwischen der zweiten Druckfeder und der Dichtringeinheit ein Druckstück angeordnet. Die Dichtringeinheit besteht bevorzugt aus Silikon.

Eine besonders vorteilhafte Ausgestaltung zeichnet sich dadurch aus, dass der Grundkörper und die Klemmeinheit und/oder die Andrückmutter aus elektrisch leitenden Material besteht, wobei insbesondere ein an dem Kabel vorhandenes Schutzgeflechtende nach Abisolierung zur elektrisch leitenden Verbindung zwischen Klemmeinheit und Grundkörper klemmend anordenbar ist. Dadurch, dass hier eine klemmende Verbindung des Schutzgeflechtes erfolgt, ist gleichzeitig auch eine Zugentlastung der jeweiligen Kabel gegeben.

Um die Verbindung von Grundkörper und Andrückmutter gegebenenfalls wieder lösen zu können, ist es vorteilhaft, dass die Andrückmutter und/oder der Grundkörper zumindest bereichsweise eine Außenumfangskontur aufweist/aufweisen, die zum Ansatz eines Drehwerkzeuges geeignet ausgebildet ist.

Ein besonders einfacher Montageanschluss ist dadurch gegeben, dass der Grundkörper in seinem Endbereich, insbesondere beabstandet zum Stirnrandbereich, jeweils ein Außengewinde aufweist und die Andrückmutter ein Innengewinde aufweist, das auf das Außengewinde des Grundkörpers aufschraubbar ist.

Die erfindungsgemäße Kabelverbindungsmuffenvorrichtung dient bevorzugt der Verbindung von zwei Heizleiterkabeln gleicher oder unterschiedlicher Querschnitte beziehungsweise Außendurchmesser. Die Heizleiter beziehungsweise Kaltleiter der Heizkabel werden mittels sogenannter Stoßverbinder verbunden, dass heißt mit einer Spezialzange werden Stoßverbinder und die Heiz-/ beziehungsweise Kaltleiter fest ineinander gepresst (Crimpverbindung). Das Schutzgeflecht der Heizleiterkabel wird beim Aufschrauben der Andrückmutter auf den Grundkörper zwischen die Flanken der Klemmeinheit und entsprechender Gegenflanken des Grundkörpers geklemmt, wobei gleichzeitig durch Aktivierung der auf die Kabeldichteinheit beziehungsweise Dichtringeinheit wirkenden ersten Druckfeder beziehungsweise zweiten Druckfeder eine Abdichtung sowohl gegen Luft und Wasser erzielt wird als auch gleichzeitig eine Zugentlastung der Kabel entsteht.

Die dargestellte Konstruktion der Kabelverbindungsmuffenvorrichtung hat insbesondere den Vorteil, dass eine weitestgehende Vormontage möglich ist, das heißt, dass vor Ort nur wenige Bauteile montiert werden müssen.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung einer Kabelverbindungsmuffenvorrichtung mit einem Grundkörper und einer durch Aufschrauben einer Andrückmutter erreichbaren Dichtkonstruktion, explosionsartig dargestellt im linken Anschlussbereich eines Grundkörpers,
- Fig. 2: ein erstes vormontiertes Bauteil mit Andrückmutter und weiteren Bauteilen in einer Perspektive,
- Fig. 3: ein zweites vormontiertes Bauteil mit einer Klemmeinheit und weiteren Bauteilen in einer Perspektive,
- Fig. 4: schematischer Schnitt durch die Kabelverbindungsmuffenvorrichtung gemäß Fig. 1 bei noch nicht aufgeschraubter Mutter (linke Hälfte oberhalb der Achse) und bei aufgeschraubter Mutter (linke Hälfte unterhalb der Achse), wobei die rechte Hälfte der Vorrichtung in Ansicht dargestellt ist,
- Fig. 5: schematischer Schnitt durch ein übliches Heizleiterkabel und
- Fig. 6: schematische Außenansicht einer Heizkabelverbindungsmuffenvorrichtung mit angeschlossenen, miteinander verbundenen Heizkabeln.

### WEGE ZUM AUSFÜHREN DER ERFINDUNG

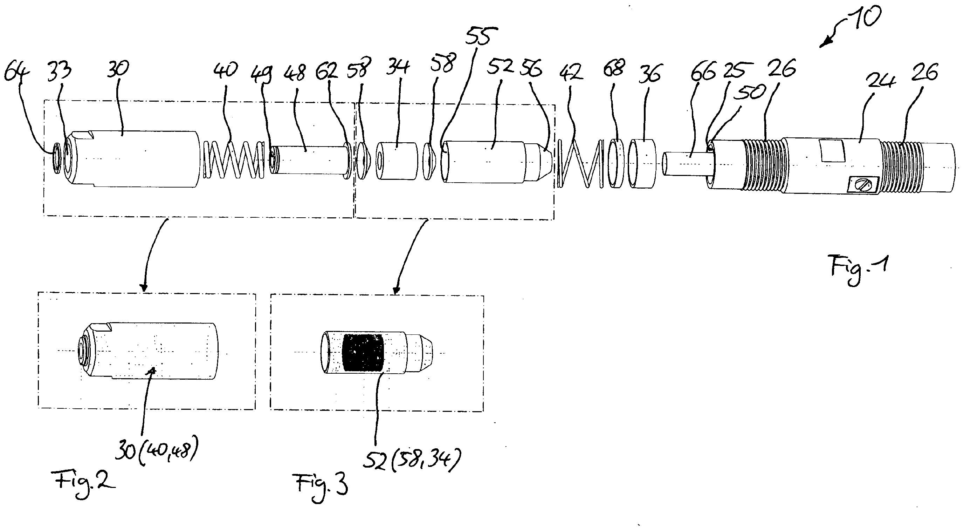

Die Figuren zeigen ein Ausführungsbeispiel einer erfindungsgemäßen Kabelverbindungsmuffenvorrichtung 10, insbesondere für Heizkabel 12.1, 12.2. Gemäß der Explosionsdarstellung in Fig. 1, in der im rechten Endbereich ein Grundkörper 24 mit einer durchgehenden Ausnehmung 25 dargestellt ist, sind im Bereich links von dem Grundkörper 24 diejenigen Bauteile, die eine dauerhaft zuverlässige Abdichtung eines eingeführten Heizkabels gewährleisten, dargestellt. Dieselben Bauteile sind auch rechts von dem Grundkörper 24 vorhanden, was in Fig. 1 nicht dargestellt ist.

Zunächst werden die in Fig. 1 dargestellten Bauteile von links nach rechts erläutert. Im linken Endbereich ist ein Sprengring 64 vorhanden. Daran anschließend ist eine metallische Andrückmutter 30 mit einer durchgehenden Ausnehmung 33 vorhanden. Daran schließt eine erste Druckfeder 40, die als Schraubendruckfeder ausgebildet ist, und ein Druckstück 48 an, das in seinem in Fig. 1 rechten Endbereich einen überstehenden Flansch 62 besitzt und ebenfalls eine durchgehende Ausnehmung 49 aufweist.

Der Innendurchmesser der ersten Druckfeder 40 ist dabei so bemessen, dass die erste Druckfeder 40 auf den Schaft des Druckstücks 48 bis zum Flansch 62 aufgeschoben werden kann.

Nach rechts daran anschließend ist eine Schlussringeinheit 58 vorhanden, die eine kegelstumpfmantelförmige Kontur aufweist und aus Teflon besteht. Daran anschließend ist eine Dichtringeinheit 34 aus hitzebeständigen Silikon dargestellt, die dichtend auf ein Heizkabel aufgeschoben werden kann. Rechts daneben ist eine weitere Schlussringeinheit 58 vorhanden. Beide Schlussringeinheiten bestehen aus Teflon.

An die Schlussringeinheit 58 schließt eine Klemmeinheit 52 an, die eine durchgehende Stufenausnehmung 55 besitzt und in ihrem rechten Endbereich eine sich nach rechts verjüngende Kegelstumpfaußenkontur, das heißt eine geneigte Flanke 56 aufweist.

Daran anschließend ist eine Druckfeder 42 vorhanden, die als Schraubendruckfeder ausgebildet ist und deren Innendurchmesser so bemessen ist, dass sie auf die Klemmeinheit 52 aufgeschoben werden kann.

Die Klemmeinheit 52 ist aus Metall.

Rechts anschließend ist an die zweite Druckfeder 42 ein Druckring 68 aus Teflon vorhanden, an den rechtseitig eine Dichtringeinheit 36 anschließt.

Der Durchmesser des Druckrings 68 und der Dichtringeinheit 36 entsprechen im Wesentlichen dem Durchmesser der zweiten Druckfeder 42, wobei die Bauteile 36, 68 auf die Klemmeinheit 52 aufgeschoben werden können.

An die Druckringeinheit 36 rechtsseitig anschließend ist ein im Inneren der durchgehenden Ausnehmung 25 des Grundkörpers 24 angeordnetes Isolierrohr 66 vorhanden, das die im Innern des Grundkörpers 24 vorhandene (in Fig. 1 nicht näher dargestellte) Verbindung der Heiz-/ beziehungsweise Kaltleiter der anzuschließenden Kabel isolierend umgibt.

Der Grundkörper 24 weist jeweils beabstandet zum linken beziehungsweise rechten Randbereich ein Außengewinde 26 auf, das auf ein innerhalb der Andrückmutter 30 vorhandenes Innengewinde 27 abgestimmt ist, so dass die Andrückmutter 30 auf den Grundkörper 24 aufgeschraubt werden kann.

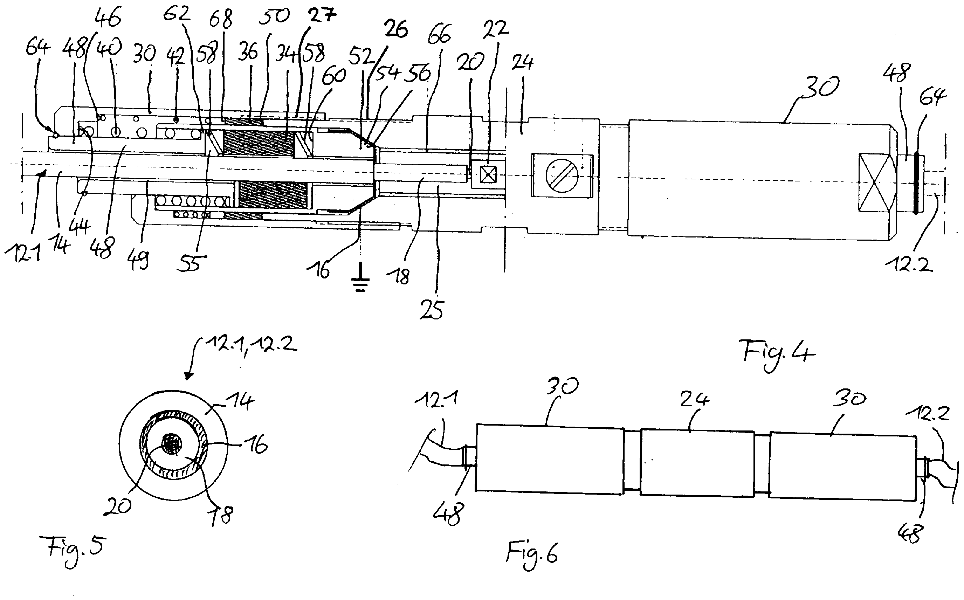

In Fig. 4 ist in der linken Hälfte im oberen Bereich der zusammengesetzte Zustand der Heizkabelverbindungsmuffenvorrichtung 10 dargestellt, wobei die Andrückmutter 30 noch nicht auf das Außengewinde 26 des Grundkörpers 24 aufgeschraubt ist. Darunter ist in der linken Hälfte im Längsschnitt der aufgeschraubte Zustand der Andrückmutter 30 dargestellt.

Die erste Druckfeder 40 ist zwischen dem Flansch 62 des Druckstücks 48 und einem ersten Innenanschlag 44 der Andrückmutter 30 angeordnet. Die zweite Druckfeder 42 ist zwischen den Druckring 68 und einem zweiten Innenanschlag 46 der Andrückmutter 30 angeordnet.

In dem noch nicht aufgeschraubten Zustand der Andrückmutter 30 sind die erste und die zweite Druckfeder 40, 42 entspannt oder nahezu entspannt.

Das Druckstück 48 ist innerhalb der Andrückmutter 30 längsverschieblich vorhanden. Der rechte Endbereich des Druckstücks 48 ist bereichsweise innerhalb der Stufenausnehmung 55 der Klemmeinheit 52 vorhanden und in dieser ebenfalls längsverschieblich geführt. Die nach rechts weisende Stirnseite des Druckstücks 48 mit Flansch 62 liegen an der in Fig. 4 linken Schlussringeinheit 58 an, wobei die linke als auch die rechte Schlussringeinheit 58 in diesem noch nicht verschraubten Zustand der Andrückmutter 30 noch seine geneigte Querschnittslage einimmt. Die Innenwandung der Klemmeinheit 52 in Verbindung mit einem Endanschlag 60 und dem Flansch 62 des Druckstücks 48 und der Außenwandung des eingeführten Heizkabels 12.1 bilden eine Kammer, in der die Dichtringeinheit 34 angeordnet ist, wobei im linken und rechten Endbereich jeweils die Schlussringeinheit 58 vorhanden ist.

Die Dichtringeinheit 36 liegt zwischen der Außenwandung der Klemmeinheit 52 und der Innenwandung der Andrückmutter 30 dichtend an. Ebenso liegt die Dichtringeinheit 34 an der Außenwandung des Heizkabels 12.1 und der Innenwandung der Klemmeinheit 52 dichtend an.

Die Dichtringeinheit 36 liegt weiterhin an der in Fig. 4 linken vorderen Stirnseite 50 des Grundkörpers 24 dichtend an.

Wird nun die Andrückmutter 30 auf das Außengewinde 26 des Grundkörpers 24 aufgeschraubt, verschiebt sich die Andrückmutter 30 relativ zum Grundkörper 24 nach rechts, wobei eine Druckkraft auf die erste Druckfeder 40 ausgeübt wird, die wiederum eine Druckkraft auf das Druckstück 48 ausübt. Infolge dieser Druckkraft werden die beiden Schlussringeinheiten 58, die sich links und rechts der Kabeldichteinheit 34 befinden in eine vertikale Position gedrückt, wobei im aufgeschraubten Zustand die Andrückmutter insgesamt auf die Dichtringeinheit 34 eine Druckkraft ausübt. Gleichzeitig wird beim Aufschrauben der Andrückmutter 30 die zweite Druckfeder 42 komprimiert, wodurch eine Druckkraft auf den Druckring 68 und somit auf die Dichtringeinheit 36 ausgeübt wird, der dann gegen die Stirnseite 50 des Grundkörpers 24 gepresst wird.

Im Ergebnis ist so, dass nach Aufschrauben der Andrückmutter 30 sowohl die Dichtringeinheit 34 als auch die Dichtringeinheit 36 unter einem permanenten Anpressdruck stehen, was sich vorteilhaft auf die dauerhafte Dichtfunktion bei unterschiedlichsten Temperaturen auswirkt.

Ein besonderer Vorteil der erfindungsgemäßen Konstruktion besteht darin, dass gewisse Teile vormontiert werden können. So ist es möglich, wie in Fig. 2 dargestellt, dass die Andrückmutter 30 bereits die eingesetzte erste Druckfeder 40 und das eingesetzte Druckstück 48 aufweist und eine Vormontageeinheit bildet. Des Weiteren ist es möglich, wie in Fig. 3 dargestellt, dass im Inneren der Klemmeinheit 52 bereits die Kabeldichteinheit 34 und die beiden Schlussringeinheiten 58 eingeschoben sind.

Der Sprengring 64 wird nach dem Einschieben des Druckstücks 48 in die Andrückmutter 30 in einer Nut des Druckstücks 48 verankert, so dass das Druckstück 48 und die erste Druckfeder 40 nicht mehr aus der Andrückmutter 30 herausfallen kann.

Des Weiteren können die zweite Druckfeder 42, der Druckring 68 und die Dichtringeinheit 36 auf die Klemmeinheit 52 aufgeschoben werden.

In Fig. 5 ist schematisch der Querschnitt eines üblichen Heizleiterkabels 12 dargestellt. Im Zentrum ist ein Heizleiter 20 vorhanden, der als auch Kaltleiter ausgebildet sein kann, der von einer Innenisolierung 18 umgeben ist, die wiederum von einem Schutzgeflecht 16 umgeben ist, das wiederum von einer Außenisolierung umgeben ist.

Bei der Montage der Heizkabelverbindungsmuffenvorrichtung 10 werden beide Kabel 12.1, 12.2 jeweils nacheinander durch die vormontierte Teilegruppe gemäß Fig. 2 und gemäß Fig. 3 geschoben und in ihrem Endbereich abisoliert. Dabei wird zunächst die Außenisolierung 14 über eine vorgegebene Länge, beispielsweise circa 35 mm abisoliert und das dann zugängliche Schutzgeflecht 16 gekürzt, beispielsweise um circa 20 mm, und gleichmäßig um das Kabel 12.1, 12.2 nach außen gebogen. Daran anschließend wird eines der beiden Kabel 12.1 durch den Grundkörper 24 mit Isolierröhre 66 geschoben und es wird die Innenisolierung 18 der Heizleiter 20 abisoliert. Danach werden die Heizleiter 20 des ankommenden und abgehenden Heizkabels beispielsweise mittels Stoßverbinder 22 miteinander verbunden. Nachfolgend wird danach der Grundkörper 24 mit der Isolierröhre 66 mittig über den Stoßverbinder 22 zurückgeschoben und die Andrückmutter 30 kann auf einer Seite auf das Außengewinde 26 des Grundkörpers 24 aufgeschraubt werden. Dabei wird die Teilegruppe gemäß Fig. 3 an das abisolierte, umgebogene Außengeflecht 18 herangeführt, so dass es im Bereich der Flanke 56 der Klemmeinheit 52 anliegt. Durch weiteres Anschrauben der Andrückmutter 30 wird dann das Schutzgeflecht 16 an dem Grundkörper 24 fixiert, da die geneigte Flanke 56 an eine entsprechende Gegenflanke 54 des Grundkörpers gepresst wird. Durch diese Fixierung des Schutzgeflechts 16 ist eine Zugentlastung des gesamten Kabels 12.1, 12.2 gegeben.

Durch das Zusammenschrauben des Grundkörpers 24 mit der Andrückmutter 30 wird über die erste Druckfeder 40 das Druckstück 48 in die Klemmeinheit 52 gedrückt. Hierdurch wird die Dichtringeinheit 34 aus hitzebeständigen Silikongummi und die Schlussringeinheiten 58 aus Teflon zusammen gedrückt, wobei die Dichtringeinheit 34 sowohl nach innen als auch nach außen gepresst wird und eine zuverlässige Kabelabdichtung erfolgt. Da die Andrückmutter 30 über die zweite Druckfeder 42 den Druckring 68 gegen die Dichtringeinheit 36 presst erfolgt hierbei die Abdichtung nach außen.

Die Dichtringeinheit 34 wird bei hoher Temperatur etwas weich, wobei die Abdichtwirkung dadurch vermindert wird und die beiden Schlussringeinheiten 58 ein Eindringen der weichen Dichtringeinheit 34 in den Kabelkanal der Klemmeinheit 52 und des Druckstücks 48 verhindern, wodurch insgesamt eine Druckleckage der Dichtringeinheit 34 zuverlässig verhindert wird. Hierzu sind die Schlussringeinheiten 58 so bemessen, dass sich die Schlussringeinheiten 58 in der Anlegesituation im angeschlossenen Zustand der Andrückmutter 30 an dem Grundkörper 24 sich schlüssig um das Heizkabel 12.1 beziehungsweise 12.2 legen, sie jedoch nur sekundär an der Gesamtabdichtung teilhaben.

Wie bereits oben beschrieben wird durch das Anschrauben der Andrückmutter 30 neben der Herstellung einer zuverlässigen Dichtfunktion gleichzeitig das Schutzgeflecht 16 zwischen der Klemmeinheit 52 und dem Grundkörper 24 geklemmt, wodurch eine Kabelzugentlastung ensteht.

## Patentansprüche

1. Kabelverbindungsmuffenvorrichtung (10) zur dichtenden Verbindung eines ankommenden und eines abgehenden Kabels (12.1,12.2), insbesondere für Heizkabel (12.1, 12.2) und insbesondere geeignet für den Ex-Bereich, mit
- einem Grundkörper (24) mit einer durchgehenden Grundkörperausnehmung (25),
- jeweils einer in den Endbereichen des Grundkörpers (24) angeschlossener Andrückmutter (30) und
- Dichtringeinheiten (34, 36), die den Verbindungsbereich der Kabel (12.1,12.2) vor äußeren Einflüssen schützen, wobei
- die Dichtringeinheiten (34, 36) bei an dem Grundkörper (24) angeschlossener Andrückmutter (30) permanent unter der pressenden Wirkung von Druckfedern (40,42) stehen,
- innerhalb jeder Andrückmutter (30) ein längsverschiebliches Druckstück (48) mit einer durchnehmenden Ausnehmung für das Kabel (12.1, 12.2) vorhanden ist,
- eine an das Druckstück (48) innenseitig anschließende, in Querrichtung ringförmige Dichtringeinheit (34) vorhanden ist, die die Außenumfangsfläche des Kabels (12.1, 12.2) dichtend umgibt und im übrigen an der Innenwandung der Andrückmutter (30) und des Grundkörpers (24) direkt oder indirekt dichtend anliegt, und
- eine erste Druckfeder (40) zwischen der Andrückmutter (30) und dem Druckstück (48) wirkt,
- **dadurch gekennzeichnet, dass**
- eine Klemmeinheit (52) mit einer durchgehenden Stufenausnehmung mit einem Endanschlag (60) vorhanden ist, die bereichsweise in den Grundkörper (24) eingeführt ist, innerhalb derer das Druckstück (48) bereichsweise angeordnet und längsverschieblich vorhanden ist, wobei die Innenwandung mit Endanschlag (60) der Klemmeinheit (52), die vordere Stirnseite des Druckstücks (48) und die Außenwandung eines eingeführten Kabels (12.1, 12.2) eine Kammer bilden, innerhalb derer die Dichtringeinheit (34) nach allen Seiten dichtend unter der Wirkung der ersten Druckfeder (40) vorhanden ist,
- zwischen der Außenwandung der Klemmeinheit (52) und der Innenwandung der Andrückmutter (30) eine Dichtringeinheit (36) dichtend angeordnet ist, die mit ihrer vorderen Stirnseite an der Stirnseite des Grundkörpers (24) anliegt und an ihrer gegenüberliegenden Stirnseite über eine zweite Druckfeder (42), die sich an der Innenwandung der Andrückmutter (30) abstützt, bei an dem Grundkörper (24) angeschlossener Andrückmutter (30) mit Druck beaufschlagt wird,
- an jeder Stirnseite der Dichtringeinheit (34) eine Schlussringeinheit (58) angeordnet ist und
- an dem nach innen weisenden Endbereich des Druckstücks (48) ein nach außen weisender Flansch (62) angeschlossen/ angeformt ist.

2. Kabelverbindungsmuffenvorrichtung nach Anspruch 1,
- **dadurch gekennzeichnet, dass**
- die Druckfedern (40, 42) als zumindest eine Schraubendruckfeder/n ausgebildet sind.

3. Kabelverbindungsmuffenvorrichtung nach Anspruch 1,
- **dadurch gekennzeichnet, dass**
- die Dichtringeinheit (34) aus Silikon besteht.

4. Kabelverbindungsmuffenvorrichtung nach Anspruch 1,
- **dadurch gekennzeichnet, dass**
- die Schlussringeinheit (58) aus Teflon besteht.

5. Kabelverbindungsmuffenvorrichtung nach Anspruch 1 oder 4,
- **dadurch gekennzeichnet, dass**
- die Schlussringeinheit (58) eine kegelstumpfmantelförmige Kontur aufweist.

6. Kabelverbindungsmuffenvorrichtung nach einem oder mehreren der vorstehenden Ansprüche 1 bis 5,
- **dadurch gekennzeichnet, dass**
- die erste Druckfeder (40) zwischen dem Flansch (62) des Druckstücks (48) und einem ersten Innenanschlag (44) der Andrückmutter (30) angeordnet ist und das Druckstück (48) umgibt.

7. Kabelverbindungsmuffenvorrichtung nach Anspruch 1,
- **dadurch gekennzeichnet, dass**
- zwischen der zweiten Druckfeder (42) und der Dichtringeinheit (36) ein Druckring (48) angeordnet ist.

8. Kabelverbindungsmuffenvorrichtung nach Anspruch 1,
- **dadurch gekennzeichnet, dass**
- die Dichtringeinheit (36) aus Silikon besteht.

9. Kabelverbindungsmuffenvorrichtung nach einem oder mehreren der Ansprüche 1, 6 bis 8,
- **dadurch gekennzeichnet, dass**
- der Grundkörper (24) und die Klemmeinheit (52) und/oder die Andrückmutter (30) aus elektrisch leitenden Material besteht, wobei insbesondere ein an dem Kabel vorhandenes Schutzgeflechtende nach Abisolierung zur elektrisch leitenden Verbindung zwischen Klemmeinheit (52) und Grundkörper (24) klemmend anordenbar ist.

10. Kabelverbindungsmuffenvorrichtung nach einem oder mehreren der vorstehenden Ansprüche,
- **dadurch gekennzeichnet, dass**
- die Andrückmutter (30) und/oder der Grundkörper (24) zumindest bereichsweise eine Außenumfangskontur aufweist/aufweisen, die zum Ansatz eines Drehwerkzeuges geeignet ausgebildet ist.

11. Kabelverbindungsmuffenvorrichtung nach einem oder mehreren der vorstehenden Ansprüche,
- **dadurch gekennzeichnet, dass**
- der Grundkörper (24) in seinem Endbereich, insbesondere beabstandet zum Stirnrandbereich, jeweils ein Außengewinde (26) aufweist und die Andrückmutter (30) ein Innengewinde (27) aufweist, das auf das Außengewinde (26) des Grundkörpers (24) aufschraubbar ist.

## Claims

1. Cable connection sleeve apparatus (10) for connecting, in a sealing manner, an incoming and an outgoing cable (12.1, 12.2), in particular for heating cables (12.1, 12.2) and in particular suitable for areas in which there is a risk of explosion, comprising
- a main body (24) with a continuous main body recess (25),
- in each case one thrust nut (30) which is connected in the end regions of the main body (24), and
- sealing ring units (34, 36) which protect the connection region of the cables (12.1, 12.2) against external influences, wherein
- the sealing ring units (34, 36) are permanently under the pressing action of compression springs (40, 42) when the thrust nut (30) is connected to the main body (24),
- there is a longitudinally displaceable pressure piece (48) with a through-going recess for the cable (12.1, 12.2) within each thrust nut (30),
- there is a sealing ring unit (34) which adjoins the inside of the pressure piece (48) and is annular in the transverse direction and surrounds the outer circumferential surface of the cable (12.1, 12.2) in a sealing manner and otherwise bears directly or indirectly against the inner wall of the thrust nut (30) and the main body (24) in a sealing manner, and
- a first compression spring (40) acts between the thrust nut (30) and the pressure piece (48),
- **characterized in that**
- there is a clamping unit (52) with a continuous stepped recess with an end stop (60), which clamping unit is inserted in regions into the main body (24) and within which the pressure piece (48) is arranged in regions and is present in a longitudinally displaceable manner, wherein the inner wall with the end stop (60) of the clamping unit (52), the front end side of the pressure piece (48) and the outer wall of an inserted cable (12.1, 12.2) form a chamber within which the sealing ring unit (34) is present under the action of the first compression spring (40) in a manner sealed on all sides,
- a sealing ring unit (36) is arranged in a sealing manner between the outer wall of the clamping unit (52) and the inner wall of the thrust nut (30), which sealing ring unit bears, by way of its front end side, against the end side of the main body (24) and has pressure applied to its opposite end side by means of a second compression spring (42), which is supported against the inner wall of the thrust nut (30), when the thrust nut (30) is connected to the main body (24),
- a closure ring unit (58) is arranged on each end side of the sealing ring unit (34), and
- a flange (62) which faces outwards is connected to/integrally formed at that end region of the pressure piece (48) which faces inwards.

2. Cable connection sleeve apparatus according to Claim 1,
- **characterized in that**
- the compression springs (40, 42) are designed as at least one helical compression spring/springs.

3. Cable connection sleeve apparatus according to Claim 1,
- **characterized in that**
- the sealing ring unit (34) is composed of silicone.

4. Cable connection sleeve apparatus according to Claim 1,
- **characterized in that**
- the closure ring unit (58) is composed of Teflon.

5. Cable connection sleeve apparatus according to Claim 1 or 4,
- **characterized in that**
- the closure ring unit (58) has a truncated cone casing-like contour.

6. Cable connection sleeve apparatus according to one or more of the preceding Claims 1 to 5,
- **characterized in that**
- the first compression spring (40) is arranged between the flange (62) of the pressure piece (48) and a first inner stop (44) of the thrust nut (30) and surrounds the pressure piece (48).

7. Cable connection sleeve apparatus according to Claim 1,
- **characterized in that**
- a pressure ring (48) is arranged between the second compression spring (42) and the sealing ring unit (36).

8. Cable connection sleeve apparatus according to Claim 1,
- **characterized in that**
- the sealing ring unit (36) is composed of silicone.

9. Cable connection sleeve apparatus according to one or more of Claims 1 and 6 to 8,
- **characterized in that**
- the main body (24) and the clamping unit (52) and/or the thrust nut (30) are/is composed of electrically conductive material, wherein, in particular, a protective braid end which is present on the cable can be arranged in a clamping manner between the clamping unit (52) and the main body (24) for the purpose of electrically conductively connection after insulation is stripped.

10. Cable connection sleeve apparatus according to one or more of the preceding claims,
- **characterized in that**
- the thrust nut (30) and/or the main body (24) have/has, at least in regions, an outer circumferential contour which is designed to be suitable for attachment of a turning tool.

11. Cable connection sleeve apparatus according to one or more of the preceding claims,
- **characterized in that**
- the main body (24) has, in its end region, in particular at a distance from the end edge region, an external thread (26) and the thrust nut (30) has an internal thread (27) which can be screwed onto the external thread (26) of the main body (24).

## Revendications

1. Dispositif de manchon de raccordement de câble (10) pour le raccordement étanche d'un câble entrant et d'un câble sortant (12.1, 12.2), en particulier pour des câbles de chauffage (12.1, 12.2) et convenant en particulier pour l'extérieur, avec
- un corps de base (24) avec un évidement de corps de base continu (25),
- respectivement un écrou de serrage (30) raccordé aux régions d'extrémité du corps de base (24), et
- des unités d'anneaux d'étanchéité (34, 36), qui préservent la zone de raccordement des câbles (12.1, 12.2) des influences extérieures, dans lequel
- les unités d'anneaux d'étanchéité (34, 36) se trouvent en permanence sous l'effet de la pression de ressorts de pression (40, 42) lorsque l'écrou de serrage (30) est raccordé au corps de base (24),
- il se trouve à l'intérieur de chaque écrou de serrage (30) une pièce de pression (48) mobile en longueur avec un évidement continu pour le câble (12.1, 12.2),
- il se trouve une unité d'anneau d'étanchéité annulaire (34) en direction transversale appliquée intérieurement sur la pièce de pression (48), qui entoure de façon étanche la surface périphérique extérieure du câble (12.1, 12.2) et qui par ailleurs s'applique directement ou indirectement de façon étanche sur la paroi intérieure de l'écrou de serrage (30) et du corps de base (24), et
- un premier ressort de pression (40) agit entre l'écrou de serrage (30) et la pièce de pression (48), **caractérisé en ce que**
- il se trouve une unité de serrage (52) avec un évidement étagé continu avec une butée d'extrémité (60), qui est introduite localement dans le corps de base (24), à l'intérieur de laquelle la pièce de pression (48) est disposée localement et est mobile en longueur, dans lequel la paroi intérieure avec la butée d'extrémité (60) de l'unité de serrage (52), le côté frontal avant de la pièce de pression (48) et la paroi extérieure d'un câble introduit (12.1, 12.2) forment une chambre, à l'intérieur de laquelle se trouve l'unité d'anneau d'étanchéité (34) étanche de tous les côtés sous l'action du premier ressort de pression (40),
- une unité d'anneau d'étanchéité (36) est disposée de façon étanche entre la paroi extérieure de l'unité de serrage (52) et la paroi intérieure de l'écrou de pression (30), et s'applique par son côté frontal avant sur le côté frontal du corps de base (24) et exerce une pression à son côté frontal opposé, au moyen d'un deuxième ressort de pression (42) qui s'appuie sur la paroi intérieure de l'écrou de serrage (30), lorsque l'écrou de serrage (30) est raccordé au corps de base (24),
- une unité d'anneau de fermeture (58) est disposée sur chaque côté frontal de l'unité d'anneau d'étanchéité (34), et
- une bride tournée vers l'extérieur (62) est raccordée/formée sur la région d'extrémité tournée vers l'intérieur de la pièce de pression (48).

2. Dispositif de manchon de raccordement de câble selon la revendication 1, **caractérisé en ce que** les ressorts de pression (40, 42) sont réalisés sous la forme d'au moins un ressort de pression hélicoïdal.

3. Dispositif de manchon de raccordement de câble selon la revendication 1, **caractérisé en ce que** l'unité d'anneau d'étanchéité (34) est constituée de silicone.

4. Dispositif de manchon de raccordement de câble selon la revendication 1, **caractérisé en ce que** l'unité d'anneau de fermeture (58) est constituée de téflon.

5. Dispositif de manchon de raccordement de câble selon la revendication 1 ou 4, **caractérisé en ce que** l'unité d'anneau de fermeture (58) présente un contour extérieur en forme de tronc de cône.

6. Dispositif de manchon de raccordement de câble selon une ou plusieurs des revendications précédentes 1 à 5, **caractérisé en ce que** le premier ressort de pression (40) est disposé entre la bride (62) de la pièce de pression (48) et une première butée intérieure (44) de l'écrou de pression (30) et entoure la pièce de pression (48).

7. Dispositif de manchon de raccordement de câble selon la revendication 1, **caractérisé en ce qu'**une bague de pression (48) est disposée entre le deuxième ressort de pression (42) et l'unité d'anneau d'étanchéité (36).

8. Dispositif de manchon de raccordement de câble selon la revendication 1, **caractérisé en ce que** l'unité d'anneau d'étanchéité (36) est constituée de silicone.

9. Dispositif de manchon de raccordement de câble selon une ou plusieurs des revendications 1, 6 à 8, **caractérisé en ce que** le corps de base (24) et l'unité de serrage (52) et/ou l'écrou de pression (30) est constitué d'un matériau électriquement conducteur, dans lequel en particulier une extrémité tissée de protection peut, après avoir été dénudée, être disposée de façon serrée entre l'unité de serrage (52) et le corps de base (24) pour assurer une connexion électriquement conductrice.

10. Dispositif de manchon de raccordement de câble selon une ou plusieurs des revendications précédentes, **caractérisé en ce que** l'écrou de serrage (30) et/ou le corps de base (24) présente (nt) au moins localement un contour périphérique extérieur, qui a une forme adaptée à l'application d'un outil de rotation.

11. Dispositif de manchon de raccordement de câble selon une ou plusieurs des revendications précédentes, **caractérisé en ce que** le corps de base (24) présente dans sa région d'extrémité, en particulier à distance de la région du bord frontal, respectivement un filet extérieur (26), et l'écrou de pression (30) présente un filet intérieur (27), qui peut être vissé sur le filet extérieur (26) du corps de base (24).
